# EUROPEAN PATENT SPECIFICATION

(11) **EP 1 044 766 B1**
(45) Date of publication and mention of the grant of the patent: **09.04.2008**
(21) Application number: 99119934.0
(22) Date of filing: 11.10.1999
(51) Int. Cl.: B24B 9/10, B24B 41/06, B23Q 7/03, B65G 49/06

(54) **Conveyor for glass plates in edge working machines**
Förderer für Glasplatten in Randbearbeitungsmaschinen
Convoyeur pour plaques de verre dans des machines d'usinage des bords

(30) Priority: 13.04.1999 IT MI990763
(43) Date of publication of application: 18.10.2000
(73) Proprietor: GLASTON ITALY SPA, 22070 Bregnano (CO) (IT)
(72) Inventor: Bavelloni, Franco, 22020 San Fermo Della Battaglia(Pr.Como) (IT)
(74) Representative: Modiano, Micaela Nadia

(56) References cited:
- EP-A- 1 090 715
- US-A- 2 754 956
- US-A- 4 079 551
- US-A- 4 843 764

## Description

The present invention relates to a conveyor for glass plates in edge working machines.

More specifically the invention relates to a machine for working the edges of glass plates as defined in the preamble of claim 1.

It is known that machines for working the edges of glass plates currently use conveyors which are meant to produce the advancement of the glass plate, which is kept edgeways, on the various machining heads that treat the edges.

The conveyor is normally constituted by an abutment element which has a closed shape and a movable element which has a closed shape; said elements are arranged mutually opposite so as to retain the glass plate and move it for working.

The conveyors are usually constituted by a plurality of supporting blocks arranged side by side so as to obtain the element having a closed shape.

The supporting blocks of the prior art are provided by an elongated body which has, in a central portion, a guide for the sliding of an element which is connected to the fixed structure; the various supporting blocks are mutually joined by means of two chains which are arranged to the sides of the central guide and drive said supporting blocks.

In this embodiment, the chains are often subjected to the water sprays used in the machining heads and therefore infiltrations can occur on the guide, causing abrasions particularly due to the presence of glass dust.

Moreover, the chain located in a downward region is more easily subject to this type of wear, so that the two chains are affected by different degrees of wear, causing the supporting block to tilt and consequently stop performing its function correctly.

Other conventional structures use guiding bearings, with considerable construction costs and with particularly high maintenance costs due to the periodic replacement of the bearings.

Moreover, in these embodiments the supporting block constitutes a link of the driving chain, with further constructive complications which can cause problems in terms of incorrect operation.

US-4 096 943 discloses a snap-on top plate assembly for a conveyor.

US-A-4 079 551 discloses a machine for working the edges of glass plates as defined in the preamble of claim 1.

The aim of the present invention is to eliminate the drawbacks noted above by providing a conveyor for glass plates in edge working machines which allows to drastically reduce the wear of the components, with the great advantage of preventing any tilting of the supporting block.

Within this aim, a particular object of the present invention is to provide a conveyor in which any elongation of a link of the chain due to wear has no negative repercussions on the arrangement of the supporting blocks.

Another object of the present invention is to provide a conveyor for glass plates in edge working machines which, by way of its particular constructive characteristics, is capable of giving the greatest assurances of reliability and safety in use.

Another object of the present invention is to provide a conveyor for glass plates in edge working machines which can be easily obtained starting from commonly commercially available elements and materials and is also competitive from a purely economical point of view.

This aim, these objects and others which will become apparent hereinafter are achieved by a machine for working the edges of glass plates comprising a conveyor, as defined in claim 1.

Further characteristics and advantages of the invention are illustrated only by way of non-limitative example in the accompanying drawings, wherein;

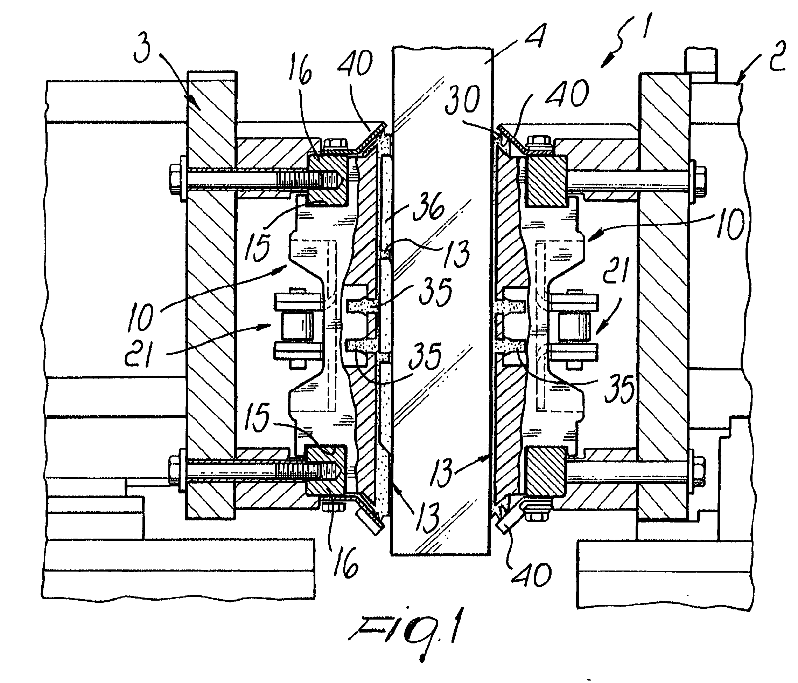

Figure 1 is a schematic sectional view of the conveyor, taken along a vertical plane;
Figure 2 is a top plan view of a detail of the conveyor;
Figure 3 is a perspective view of a supporting block;
Figure 4 is a sectional view of the conveyor provided with means for adjusting the guiding bars; and
Figure 5 is a view of a conveyor with abutment bars.

With reference to the above figures, the conveyor for glass plates in edge working machines generally designated by the reference numeral 1, is constituted by an abutment element having a closed shape, generally designated by the reference numeral 2, and a movable element having a closed shape, designated by the reference numeral 3, and can move with respect to the closed-shape element 2 in order to adapt to the different thicknesses of the glass plate being worked, designated by the reference numeral 4.

Each closed-shape element is constituted by a plurality of supporting blocks 10 which are arranged mutually side by side and mutually articulated, so as to provide the continuously movable closed-shape element.

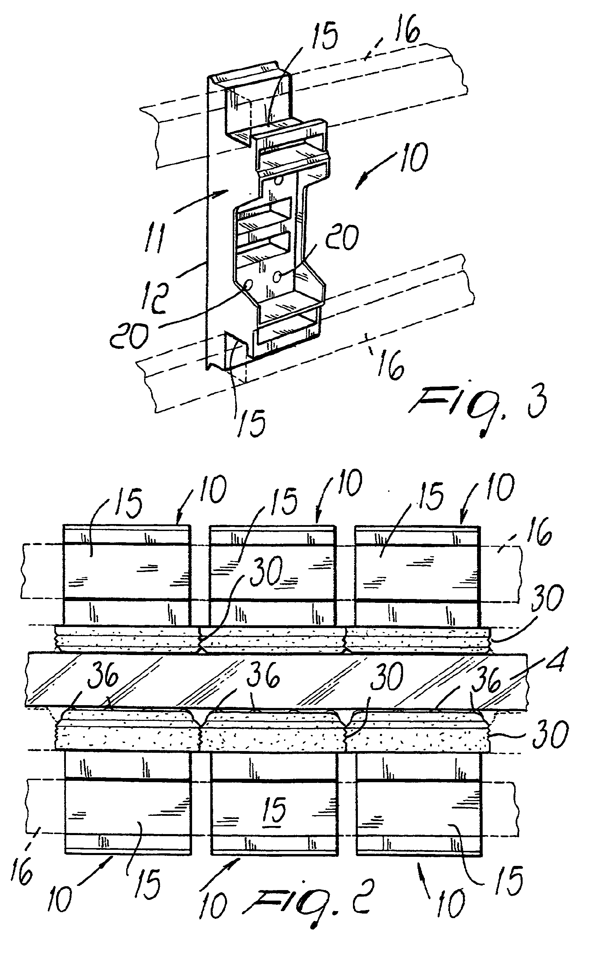

Each supporting block 10, as clearly shown in Figure 3, has an elongated body 11 which is preferably made of plastics and has a flat working surface 12 on which a sliding member is applied; said member is made of flexible material, such as rubber and the like, and is described in greater detail hereinafter.

On the other side, the body 11 forms, at the ends, substantially C-shaped seats 15 which slidingly engage guiding bars 16 connected to the frame of the machine.

The C-like shape of the seats 15 allows to retain the supporting block in a vertical direction and to retain the supporting block so as to prevent movement at right angles to the sliding plane determined by the guiding bars 16.

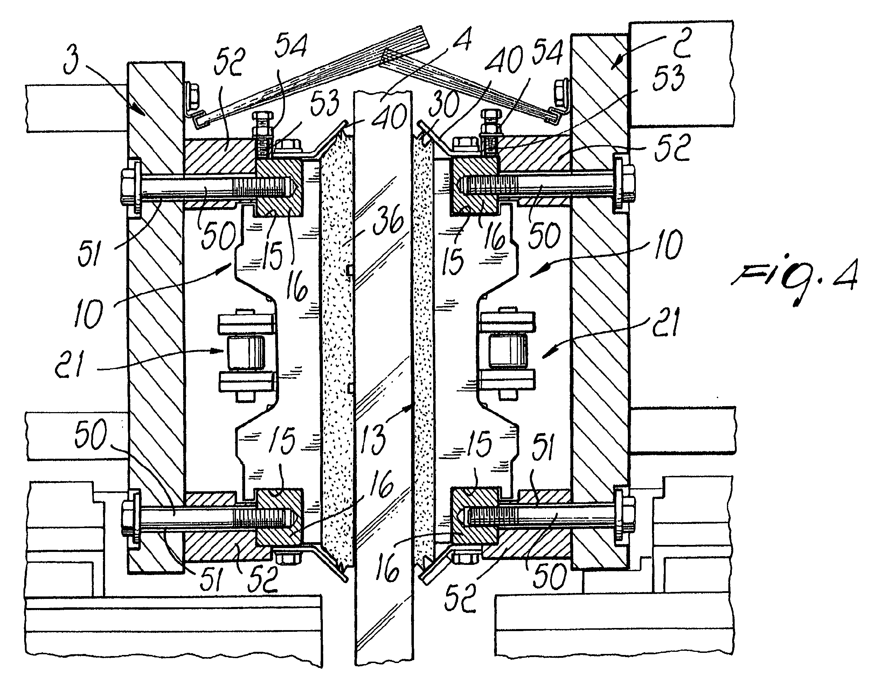

In order to position the guiding bars 16 precisely, as shown in Figure 4, it is possible to provide, for the upper guiding bar, adjustment means which allow to adjust the position of the bar, which is then fixed by means of a bolt 50 inserted in a slotted hole 51 formed in an abutment block 52 which is rigidly coupled to the structure of the corresponding closed-shape element.

The adjustment means are provided by means of a screw 53 with a locking nut 54 which rotatably engages a threaded hole formed in the block 52 and abuts against the guiding bar 16.

With this arrangement, after fixing the lower guiding bar, the supporting blocks are inserted and the upper guiding bar is positioned precisely.

In a central portion of the body 11 there are provided connecting elements 20 into which threaded nuts or the like are inserted for coupling to a single central chain, generally designated by the reference numeral 21, which mutually connects the individual supporting blocks in order to produce their advancement so as to move the plate 4 for machining.

As mentioned, each supporting block is provided with a covering of flexible material which avoids damage to the plate being retained and also acts as a sealing element against the water jets commonly used at the machining heads.

For this purpose, the supporting blocks have peripheral lips 30 which have a labyrinth-like shape, couple hermetically, at the lateral edges, to the lips of the laterally adjacent supporting block and hermetically engage screens 40 at their ends, thus achieving perfect protection of the region affected by the sliding elements.

It should also be noted that on the covering 13 there are pins 35 for their coupling to the body 11 of the supporting block.

Advantageously, the covering provided on the closed-shape abutment element is thinner, so as to avoid producing movements on the reference plane; the supporting blocks provided on the closed-shape movable element, which is adapted to the different thicknesses of the plate-like element being machined, is not only thicker but also has protruding sliding blocks 36 which provide a better pressing action in order to correctly retain the plate-like element being machined.

From the above description it is therefore evident that the invention achieves the intended aim and objects, and in particular the fact is stressed that a conveyor is provided in which a single chain is present which, even in case of wear, cannot cause tilting of the sliding blocks and accordingly always maintains optimum machining conditions.

Moreover, the particular profiles adopted as regards the sliding block and the covering elements allow to provide at all times an excellent seal against any water sprays, eliminating infiltrations inside the guides or chains.

The conveyor further comprises guiding elements for retaining the supporting blocks in a vertical direction and abutment bars which can engage the surface of the supporting blocks, for positioning in a direction which is substantially perpendicular to the sliding plane of the plate being machined.

All the details may also be replaced with other technically equivalent elements.

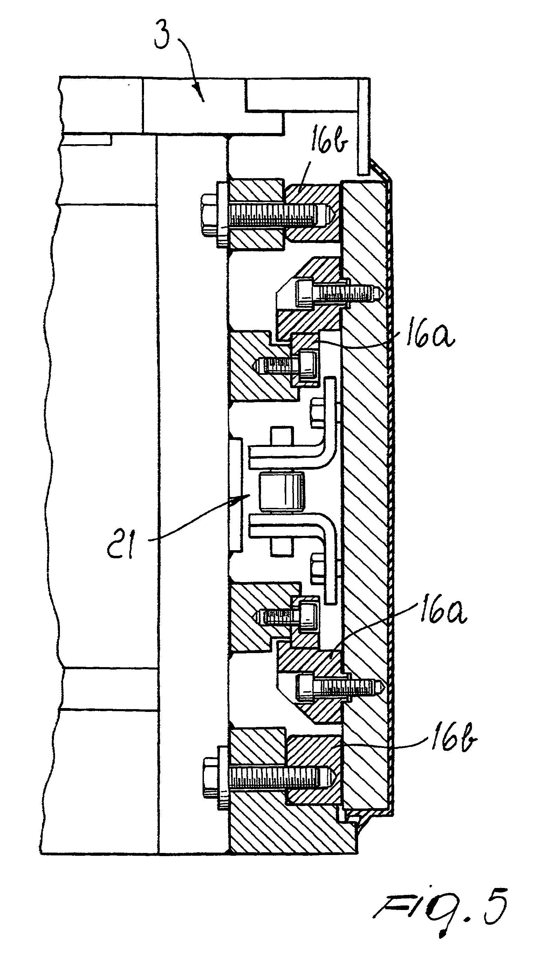

Thus, for example, as shown in Figure 5, if perfect positioning of the sliding plane is necessary, it is possible to use guiding elements 16a which retain the supporting block in a vertical direction and abutment bars 16b which, by engaging against the surface of the supporting block, produce precise abutment, preventing the possibility of displacement of the plate being machined at right angles to the sliding plane; this arrangement is particularly useful for performing beveling.

In practice, the materials employed, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine for working the edges of glass plates, comprising a conveyor (1), constituted by an abutment element (2) having a closed shape and a movable element (3) having a closed shape, the conveyor comprising guiding bars (16), a plurality of supporting blocks (10) which are arranged side by side so as to obtain the elements having a closed shape, each one of said supporting blocks comprises an elongated body (11) which forms, at the ends, seats (15) for sliding engagement with the guiding bars (16) supported by a frame of the edge working machine, a chain (21) for driving said conveyor engaging in a median portion of said supporting block, **characterized in that** said seats (15) are substantially C-shaped and said guiding bars (16) have a substantially square shape in order to retain the supporting blocks in a vertical direction and in a direction which is substantially perpendicular to the sliding plane formed by said guiding bars, so as to prevent movement at right angles to the sliding plane determined by the guiding bars (16).

2. The machine according to claim 1, **characterized in that** it comprises means for adjusting the position of at least one of said guiding bars (16).

3. The machine according to claim 2, **characterized in that** said adjustment means comprise a screw (53) which rotatably engages in an abutment block (52) and is adapted to abut against said at least one guiding bar (16).

4. The machine according to one or more of the preceding claims, **characterized in that** it comprises a bolt (50) which is inserted in a slotted hole (51) for fixing said at least one guiding bar (16) to the fixed structure.

5. The machine according to one or more of the preceding claims, **characterized in that** it comprises means for the connection of said chain (21) on said body (11).

6. The machine according to one or more of the preceding claims, **characterized in that** each supporting block (10) is provided with a covering (13) made of flexible material and having, on the closed-shape abutment element, a lower thickness than the covering element provided on the supporting blocks that constitute the movable closed-shape element, in order to adapt to the width of the plate being machined.

7. The machine according to one or more of the preceding claims, **characterized in that** said supporting block (10) comprises labyrinth-shaped peripheral lips (30) with lateral edges which can be coupled hermetically to the lips of the laterally adjacent supporting block (10) and with end lips which can hermetically engage screens (40) which are connected to said machine frame.

8. The machine according to one or more of the preceding claims, **characterized in that** it comprises guiding elements (16a) for retaining said supporting blocks (10) in a vertical direction and abutment bars (16b) which can engage the surface of said supporting blocks, for positioning in a direction which is substantially perpendicular to the sliding plane of the plate (4) being machined.

## Patentansprüche

1. Eine Maschine zur Bearbeitung der Kanten von Glasplatten, die einen Förderer (1) umfasst, welches aus einem Widerlager-Element (2) mit einer geschlossenen Form und einem beweglichen Element (3) mit einer geschlossenen Form besteht, wobei der Förderer Führungsschienen (16) umfasst, eine Vielzahl von Stützblöcken (10), die nebeneinander angeordnet sind, um die Elemente mit geschlossener Form zu bestimmen, wobei jeder der Stützblöcke einen langgestreckten Körper (11) umfasst, der an den Enden Sitze (15) für den gleitenden Eingriff mit den Führungsschienen (16) bildet, die durch einen Rahmen der Kantenbearbeitungsmaschine getragen werden, wobei eine Kette (21) zum Antreiben des Förderers in einen mittleren Abschnitt des Stützblocks eingreift, **dadurch gekennzeichnet, dass** die Sitze (15) im Wesentlichen C-förmig sind und die Führungsschienen eine im Wesentlichen quadratische Form haben, um die Stützblöcke in einer vertikalen Richtung und in einer Richtung zu halten, die im Wesentlichen rechtwinklig zu der Gleitebene ist, die durch die Führungsschienen gebildet wird, um eine Bewegung in rechten Winkeln zu der Gleitebene, die von den Führungsschienen (16) bestimmt wird, zu verhindern.

2. Die Maschine gemäß Anspruch 1, **dadurch gekennzeichnet, dass** sie Mittel zur Einstellung der Position mindestens einer der Führungsschienen (16) umfasst.

3. Die Maschine gemäß Anspruch 2, **dadurch gekennzeichnet, dass** die Einstellungsmittel eine Schraube (53) umfassen, die drehbar in einen Widerlagerblock (52) eingreift und ausgebildet ist, um gegen die mindestens eine Führungsschiene (16) anzustoßen.

4. Die Maschine gemäß einem oder mehreren der obigen Ansprüche, **dadurch gekennzeichnet, dass** sie einen Bolzen (50) umfasst, der in ein Schlitzloch (51) eingeführt wird, um die mindestens eine Führungsschiene (16) an der festen Struktur zu befestigen.

5. Die Maschine gemäß einem oder mehreren der obigen Ansprüche, **dadurch gekennzeichnet, dass** sie Mittel zur Verbindung der Kette (21) auf dem Körper (11) umfasst.

6. Die Maschine gemäß einem oder mehreren der obigen Ansprüche, **dadurch gekennzeichnet, dass** jeder Stützblock (10) mit einer Abdeckung (13) versehen ist, die aus biegsamem Material hergestellt ist, und an dem Widerlager-Element mit geschlossener Form eine geringere Dicke hat als das Abdeckungselement, das auf den Stützblöcken bereitgestellt wird, welche das bewegliche Element mit geschlossener Form bilden, um sich an die Breite der Platte, die bearbeitet wird, anzupassen.

7. Die Maschine gemäß einem oder mehreren der obigen Ansprüche, **dadurch gekennzeichnet, dass** der Stützblock (10) labyrinthförmige periphere Lippen (30) mit seitlichen Kanten umfasst, die hermetisch mit den Lippen des seitlich benachbarten Stützblocks (10) und mit Endlippen gekuppelt werden können, die hermetisch in Schirme (40) eingreifen können, welche mit dem Maschinenrahmen verbunden sind.

8. Die Maschine gemäß einem oder mehreren der obigen Ansprüche, **dadurch gekennzeichnet, dass** sie Führungselemente (16a) zum Halten der Stützblöcke (10) in vertikale Richtung und Widerlagerschienen (16b) umfasst, welche in die Oberfläche der Stützblöcke eingreifen können, zur Positionierung in einer Richtung, die im Wesentlichen rechtwinklig zur Gleitebene der Platte (4) ist, die bearbeitet wird.

## Revendications

1. Machine pour l'usinage des bords de plaques de verre, comprenant un convoyeur (1), constituée par un élément de butée (2) présentant une forme fermée et un élément mobile (3) présentant une forme fermée, le convoyeur comprenant des barres de guidage (16), une pluralité de blocs de support (10) qui sont agencés côte à côte de sorte à obtenir les éléments présentant une forme fermée, chacun desdits blocs de support comprend un corps allongé (11) qui forme, aux extrémités, des logements (15) pour un engagement coulissant avec les barres de guidage (16) supportées par un châssis de la machine d'usinage de bord, une chaîne (21) pour entraîner ledit convoyeur venant en prise dans une partie médiane dudit bloc de support, **caractérisée en ce que** lesdits logements (15) sont sensiblement en forme de C et lesdits barres de guidage (16) présentent une forme sensiblement carrée afin de retenir les blocs de support dans une direction verticale et dans une direction qui est sensiblement perpendiculaire au plan de coulissement formé par lesdites barres de guidage, de sorte à empêcher le déplacement à angle droit par rapport au plan de coulissement déterminé par les barres de guidage (16).

2. Machine selon la revendication 1, **caractérisée en ce qu'**elle comprend des moyens pour ajuster la position d'au moins l'une desdites barres de guidage (16).

3. Machine selon la revendication 2, **caractérisée en ce que** lesdits moyens d'ajustement comprennent une vis (53) qui vient en prise de façon rotative dans un bloc de butée (52) et qui est adapté pour buter contre ladite au moins une barre de guidage (16),

4. Machine selon une ou plusieurs des revendications précédentes, **caractérisée en ce qu'**elle comprend un boulon (50) qui est inséré dans un trou rainuré (51) pour la fixation de ladite au moins une barre de guidage (16) à la structure fixe.

5. Machine selon une ou plusieurs des revendications précédentes, **caractérisée en ce qu'**elle comprend des moyens pour la connexion de ladite chaîne (21) sur ledit corps (11).

6. Machine selon une ou plusieurs des revendications précédentes, **caractérisée en ce que** chaque bloc de support (10) est muni d'un couvercle (13) fait d'un matériau flexible et présentant, sur l'élément de butée à forme fermée, une épaisseur inférieure à l'élément de couverture prévu sur les blocs de support qui constituent l'élément mobile à forme fermée, afin d'adapter à la largeur de la plaque à usiner.

7. Machine selon une ou plusieurs des revendications précédentes, **caractérisée en ce que** lesdits blocs de support (10) comprennent des lèvres périphériques en forme de labyrinthe (30) avec des bords latéraux qui peuvent être couplés hermétiquement aux lèvres du bloc de support (10) latéralement adjacent et avec des lèvres d'extrémité qui peuvent engagées hermétiquement des écrans (40) qui sont reliés audit châssis de machine.

8. Machine selon une ou plusieurs des revendications précédentes, **caractérisée en ce qu'**elle comprend des éléments de guidage (16a) pour retenir lesdits blocs de support (10) dans une direction verticale et des barres de butée (16b) qui peuvent engagés la surface desdits blocs de support, pour le positionnement dans une direction qui est sensiblement perpendiculaire au plan de coulissement de la plaque (4) à usiner.
